# EUROPEAN PATENT APPLICATION

(11) **EP 1 962 543 A1**
(43) Date of publication of application: **27.08.2008**
(21) Application number: 08011181.8
(22) Date of filing: 11.03.2004
(51) Int. Cl.: H04Q 7/38, H04L 29/06

(54) **Method and system for deactivating a service account**

(30) Priority: 31.03.2003 EP 03007278; 01.12.2003 EP 03027494; 12.02.2004 US 776513; 27.02.2004 US 787974
(62) Divisional of application: 04719540.9
(71) Applicant: Nokia Siemens Networks Oy, 02610 Espoo (FI)
(72) Inventor: Tammi, Kalle, 37150 Nokia (FI); Poikselkä, Miikka, 02940 Espoo (FI); Ekman, Jani, 36270 Kangasala (FI)
(74) Representative: Eisenführ, Speiser & Partner

(57) **Abstract**

The present invention relates to a method and system for deactivating a service account associated with an application server (60) of a registered subscriber within a signaling network supporting IP based services. A status of the service account is monitored, and a request for de-registration or barring is forwarded to a registration server (20), which maintains a registration status of said subscriber, over an interface directly coupling the application server and the registration server upon determining that disruption or termination of service is required. The registration status of said subscriber is then changed so as to de-register or, respectively, bar the subscriber at the registration server by changing the registration status in response to said de-registration or barring request. Thereby, the application server is able to actively initiate a de-registration of a subscriber or a specific user identity without requiring any new registration package.

## Description

### FIELD OF THE INVENTION

The present invention relates to a method and system for deactivating a service account, e.g., a service account of an application server of a subscriber in an Internet Protocol Multimedia Subsystem (IMS).

### BACKGROUND OF THE INVENTION

In order to achieve access independence and to maintain a smooth interoperation with wired terminals across the Internet, the IMS as specified e.g. in the 3GPP specifications TS 23.228, 24.228, 24.229 and 23.218 has been developed to be conformant to IETF (Internet Engineering Task Force) "Internet Standards". The IP multimedia core network (IM CN) subsystem enables network operators of mobile or cellular networks to offer their subscribers multimedia services based on and built upon Internet applications, services and protocols. The intention is to develop such services by mobile network operators and other 3^{rd} party suppliers including those in the Internet space using the mechanisms provided by the Internet and the IM CN subsystem. The IMS thus enables conversions of, and access to, voice, video, messaging, data and web-based technologies for wireless users, and combines the growth of the Internet with the growth in mobile communications.

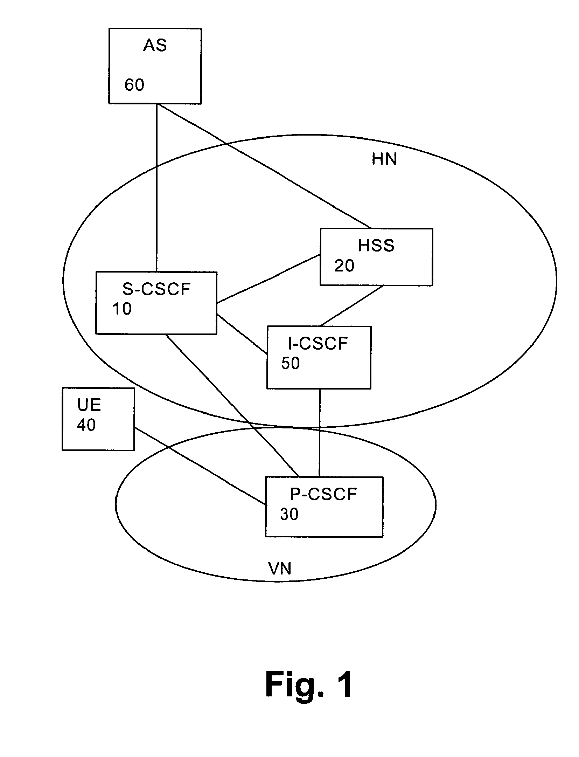

Fig. 1 shows an architecture of an IMS network according to the above 3GPP (3^{rd} Generation Partnership Project) specification. The architecture is based on the principle that the service control for home subscribed services for a roaming subscriber is in the home network HN, e.g. a Serving Call State Control Function (S-CSCF) is located in the home network HN. In Fig. 1, an S-CSCF 10 is shown, which currently controls or serves a terminal device or user equipment (UE) 40 according to the subscriber profile or network coverage of the UE 40.

In general, an S-CSCF performs the session control service for the served UEs. It maintains a session state as needed by the network operator for support of the services which may be provided by an application server (AS) 60 which may be located in an external network or in the home network HN or a visited network VN of the UE 40. Within an operator's network, different S-CSCFs may have different functionalities. The functions performed by the S-CSCF during a respective session are e.g. registration, session flow management, charging and resource utilization management. When a subscriber roams to the visited network VN, the visited network VN supports a Proxy-CSCF (P-CSCF) 30 which enables the session control to be passed to the respective S-CSCF located at the home network HN and providing the service control. Furthermore, an Interrogating-CSCF (I-CSCF) 50 is provided in the home network HN as a contact point within the operator's network for all connections destined to a subscriber of that network operator, or a roaming subscriber currently located within that network operator's service area. There may be multiple I-CSCFs within an operator's network. The functions performed by the I-CSCF 50 include assigning an S-CSCF to a user performing a registration procedure, routing a request received from another network towards the assigned S-CSCF, maintaining the address of an S-CSCF from a subscriber database, e.g. a Home Subscriber Server (HSS) 20 as shown in Fig. 1, and/or forwarding requests or responses to the S-CSCF determined based on the address of change from the HSS 20.

The P-CSCF 30 is the first contact point within the IMS. Its address is discovered by the UE 40 following a PDP (Packet Data Protocol) context activation. The P-CSCF 30 behaves like a proxy, i.e. it accepts requests and services them internally or forwards them on, possibly after translation. The P-CSCF 30 may also behave as a User Agent, i.e. in abnormal conditions it may terminate and independently generate transactions. The functions performed by the P-CSCF 30 are forwarding register requests received from the UE 40 to an I-CSCF, e.g. the I-CSCF 50, determined using the home domain name as provided by the UE 40, and forwarding requests or responses to the UE 40.

Further details regarding the functions of the different CSCF elements shown in Fig. 1 can be gathered from the above mentioned 3GPP-specifications.

It is expected that there will be many types of ASs connected to the IMS system, one example being a Push-To-Talk (PTT) or Push-over-Cellular (POC) AS. IMS will provide the AS's capabilities that can be used to implement services to the subscribers. These capabilities include e.g. 3^{rd} party registration from IMS towards the AS. In the 3^{rd} party registration, which is specified in the above 3GPP specifications, the registration towards the AS basically is just a notification that the registration in IMS has happened. However, it is not possible for the AS to start de-registration of the subscriber or even a specific Public User Identity allocated to the subscriber. There is no mechanism provided, by which the external AS can ask or request the UE to deregister. The AS can deny the 3^{rd} party registration. If the AS is then classified as critical, this should lead to the deregistration. Nevertheless, this requires that the registration is passed to the AS. It cannot actively start the deregistration procedure.

Furthermore, in release 6 specifications of 3GPP2 specification it has been determined that there will be a need in which an AS can de-register or bar a subscriber account, e.g. the AS takes care of controlling a user's prepaid account and when the account becomes empty, the AS should deny/restrict the user's access to the IMS system. As already mentioned, in the current release 5 specifications, there is no procedure in place within the IMS network that allows an AS to force de-registration or barring. For example, a service offered through the IMS by an AS, either residing within the IMS network or within another network, may require disruption or termination of the service for reasons such as deliquency or timely expiration of service.

### SUMMARY OF THE INVENTION

It is therefore an object of the present invention to provide a method and system, by means of which an AS is enabled to bar and/or de-register a user.

This object is achieved by a method of deactivating a service account associated with an application server of a registered subscriber within a signaling network supporting IP based services, the method comprising the steps of:
- monitoring a status of the service account;
- forwarding a request for de-registration or barring to a registration server, which maintains a registration status of the subscriber, over an interface directly coupling the application server and the registration server upon determining that disruption or termination of service is required; and
- changing the registration status of the subscriber so as to de-register or ,respectively, bar the subscriber at said registration server by changing the registration status in response to the de-registration or barring request.

Additionally, the above object is achieved by a system for deactivating a service account of a registered subscriber within a signaling network supporting IP based services, the system comprising:
- a registration server for maintaining a registration status of the subscriber; and
- an application server, two which said service account is associated, for monitoring a status of the service account and forwarding a request for de-registration or barring to the registration server over an interface directly coupling the application server and the registration server, upon determining that disruption or termination of service is required;
- wherein the registration server is configured to change the registration status of the subscriber so as to de-register or, respectively, bar the subscriber in response to the de-registration or barring request.

Accordingly, barring or de-registration can be done via the direct interface between the application server and the registration server. There is thus no need to introduce procedures to the interface between the application server and a call state control functionality of an IP based network. Moreover, the proposed mechanism does not require any action by the UE or terminal device and does not require any new registration package. I.e., when the de-registration occurs, the application server sends the request to the registration server which may then use standardized means for de-registering the concerned user. Even a misbehaving user can thus be de-registered properly. In practice, this de-registration may be done via Sh, Cx and/or Gm reference points.

The registration server may comprise a Home Subscriber Server of an IP Multimedia Subsystem. Then, the request may be forwarded over the Sh interface. In particular, the request may be forwarded in a profile update request command. On one hand, de-registration may be requested by setting an updated registration status to a predetermined value. On the other hand, barring may be requested by adding a barring indication to a definition of a public identity.

Further advantageous modifications or developments are defined in the dependent claims.

### BRIEF DESCRIPTION OF THE DRAWINGS

In the following, the present invention will be described in greater detail based on preferred embodiments with reference to the accompanying drawings, in which:
Fig. 1 shows a schematic block diagram of a network architecture in which the preferred embodiments of the present invention can be implemented;
Fig. 2 shows a message signaling and processing diagram indicating a de-registration procedure according to a first preferred embodiment; and
Fig. 3 shows a message signaling and processing diagram indicating a barring procedure according to a second preferred embodiment.

### DESCRIPTION OF THE PREFERRED EMBODIMENTS

The preferred embodiments will now be described on the basis of an event package subscription in an IMS network architecture as shown in Fig. 1.

The IMS architecture shown in Fig. 1 refers to a set of core network entities using the services provided by the packet-switched domain to offer multimedia services. The HSS 20 is the master database for a given user and includes the functions of conventional home location registers (HLRs) as well as new functionalities specified to IP networks, such as the IMS. The HSS 20 is the entity containing the subscription-related information to support the network entities actually handling calls and/or sessions.

Possible service configurations could comprise the Presence server assigned to the user, the MRFC (Media Resource Function Control) assigned to the user for conference purposes, other ASs which the user specifically might need to contact, e.g. by means of event subscriptions, specific URIs the user needs to register if the user wants to get the benefit of a specific service, e.g. a PTT or POC service.

According to the preferred embodiments, a mechanism is provided for deactivating a service account associated with the AS 60 of a registered subscriber within an signaling network supporting IP multimedia services, e.g. the IMS network, where registration status of a subscriber is maintained in a registration server, e.g. the HSS 20, and implementation of the application service is controlled through a call state control server within the IMS network. To achieve this, an account status is monitored within the AS 60, and a deregistration or barring request is forwarded to the HSS 20 over an interface, e.g. the Sh interface, directly coupling the AS 60 and the HSS 20 upon determining that disruption or termination of service is required. The de-registration or barring request is received at the HSS 20, and the de-registration or barring request is implemented by changing the registration status within a subscribers profile. Hence, the AS 60 can request the HSS 20 to bar and/or de-register a user's public identity or identities via the Sh interface.

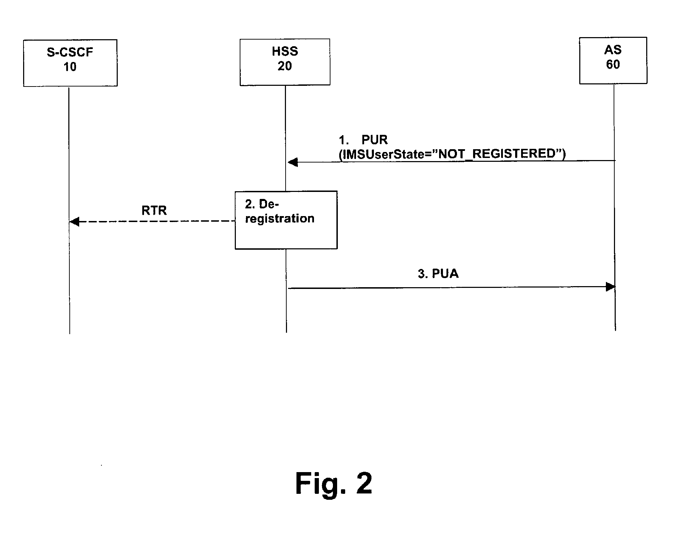

Fig. 2 shows a schematic signaling diagram according to the first preferred embodiment where the AS 60 can initiate de-registration of a service account of a user. In case of de-registration, updating of user's registration status can be enabled via Sh interface and the AS 60 will send a Profile-Update-Request (PUR) Sh Diameter command to the HSS 20 (step 1). The PUR contains User-Data AVP in XML format, which contains the updated registration status, e.g. IMS User State XML tag, with a value "NOT_REGISTERED". This is interpreted by the HSS 20 as a de-registration of the corresponding IMS user. The de-registration covers the whole implicitly registered public identity set to which the public identity included in the PUR command belongs to. When the HSS 20 has successfully updated the registration status of the user (step 2), it acknowledges the updating with command Profile-Update-Answer (PUA) to the AS 60 (step 3). If necessary, the HSS 20 may initiate a de-registration procedure (e.g., RTR command) towards the S-CSCF 10 via the Cx interface.

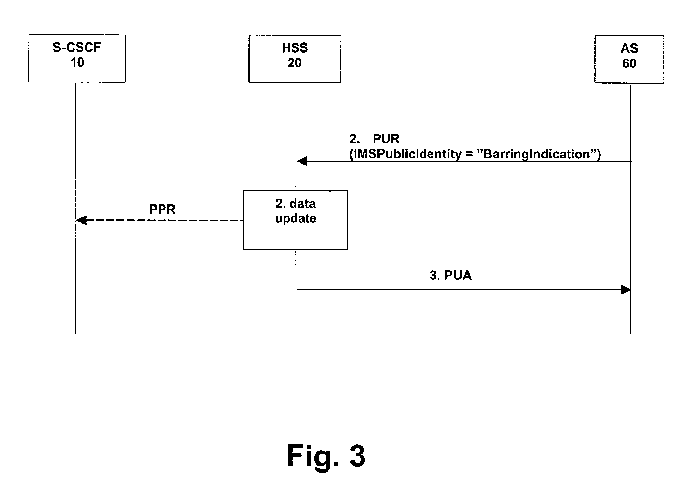

Fig. 3 shows a schematic signaling diagram according to the second preferred embodiment where the AS 60 can initiate barring of a service account of a user. In case of barring, the updating of barring indication in the HSS 20 can be enabled within the PUR command and an XML tag "Barring Indication" is added to the definition of IMS Public Identity tag (step 1). The "Barring Indication" can use the same definition, which is used in the Cx interface and it can have values "0" (false) and "1" (true). When the AS 60 wants to bar a public identity it sends a PUR command to the HSS 20. The PUR contains the public identities to be barred and their corresponding barring indications. The HSS 20 will update its data according the PUR (step 2) and after successful updating it will acknowledge updating to the AS 60 with a PUA command (step 3). If necessary, the HSS 20 may initiate a profile update procedure (PPR) towards the S-CSCF 10 via the Cx interface.

It is noted that the present invention is not restricted to the preferred embodiments described above. The present invention may be implemented in any data network, where a barring or de-registration procedure can be initiated via an interface between an application server and a subscriber server or database. In particular, the de-registration may be performed via other interfaces, such as for example Gm reference points. The embodiments may thus vary within the scope of the attached claims.

## Claims

1. A method comprising:
a) receiving at a registration server (20) via a direct interface from an application server (60) a request for de-registration or barring, said registration server (20) maintaining a registration status of a subscriber within a signaling network supporting IP based services; and
b) changing the registration status of said subscriber so as to de-register said subscriber at said registration server in response to said de-registration request, or, respectively, changing the barring indication of said subscriber so as to bar said subscriber at said registration server in response to said barring request.

2. A method comprising:
a) monitoring a status of a service account associated with an application server (60) of a registered subscriber within a signaling network supporting IP based services;
b) forwarding a request for de-registration or barring from said application server (60) via a direct interface to a registration server (20), which maintains a registration status of said subscriber, upon determining that disruption or termination of service is required, so as to de-register said subscriber at said registration server in response to said de-registration request, or, respectively, to change the barring indication of said subscriber so as to bar said subscriber at said registration server (20) in response to said barring request.

3. A method according to claim 2, wherein said forwarding step comprises forwarding said de-registration or barring request over an interface directly coupling said application server (60) and said registration server (20).

4. A method according to claim 2 or 3, wherein said forwarding step comprises forwarding said request to said registration server comprising a Home Subscriber Server (20) of an IP Multimedia Subsystem.

5. A method according to claim 4, wherein said forwarding step comprises forwarding said request over said interface comprising an Sh reference point.

6. A method according to claim 4 or 5, wherein said forwarding step comprises forwarding said request in a profile update request command.

7. A method according to claim 6, further comprising the step of indicating de-registration by setting an updated registration status to a predetermined value.

8. A method according to claim 6 or 7, further comprising the step of indicating barring by adding a barring indication to a definition of a public identity.

9. An apparatus configured to receive via a direct interface from an application server (60) a request for de-registration or barring, said apparatus (20) maintaining a registration status of a subscriber within a signaling network supporting IP based services, and being further configured to change the registration status of said subscriber so as to de-register said subscriber in response to said de-registration request, or, respectively, changing the barring indication of said subscriber so as to bar said subscriber at said registration server in response to said barring request.

10. An apparatus according to claim 9, wherein said apparatus is a home subscriber server (20).

11. An apparatus configured to monitor a status of an associated service account of a registered subscriber within a signaling network supporting IP based services, and to forward a request for de-registration or barring from said apparatus (60) via a direct interface to a registration server (20), which maintains a registration status of said subscriber, upon determining that disruption or termination of service is required, so as to de-register said subscriber at said registration server in response to said de-registration request, or, respectively, to change the barring indication of said subscriber so as to bar said subscriber at said registration server (20) in response to said barring request.

12. An apparatus according to claim 11, wherein said apparatus is an application server (60).
